Europäisches Patentamt

European Patent Office

Office européen des brevets

(19)

(11) Veröffentlichungsnummer : **0 098 847**
**B1**

(12) **EUROPÄISCHE PATENTSCHRIFT**

(45) Veröffentlichungstag der Patentschrift :
**05.03.86**

(21) Anmeldenummer : **83900333.2**

(22) Anmeldetag : **19.01.83**

(86) Internationale Anmeldenummer :
**PCT/DE 83/00007**

(87) Internationale Veröffentlichungsnummer :
**WO/8302699 (04.08.83 Gazette 83/18)**

(51) Int. Cl.⁴ : $H\ 04\ B\quad 1/034$

(54) **NOTFUNKGERÄT UND VERFAHREN ZU DESSEN BETRIEB.**

(30) Priorität : **22.01.82 DE 3201845**

(43) Veröffentlichungstag der Anmeldung :
**25.01.84 Patentblatt 84/04**

(45) Bekanntmachung des Hinweises auf die Patenterteilung : **05.03.86 Patentblatt 86/10**

(84) Benannte Vertragsstaaten :
**FR GB NL SE**

(56) Entgegenhaltungen :
**GB-A- 1 060 173**
**GB-A- 2 067 323**
**US-A- 3 617 894**
**US-A- 3 665 315**
**US-A- 3 876 942**
**US-A- 3 928 805**

(73) Patentinhaber : **AUTOFLUG GMBH**
**Industriestrasse 10 Postfach 1180**
**D-2084 Rellingen (DE)**

(72) Erfinder : **HANSEN, Holger**
**Schulterblatt 49**
**D-2000 Hamburg 6 (DE)**

(74) Vertreter : **Kühnemann, Klaus**
**Sonderburgstrasse 36**
**D-4000 Düsseldorf 11 (DE)**

EP 0 098 847 B1

**Beschreibung**

Die Erfindung betrifft ein Notfunkgerät, mit einer ersten Sendeeinrichtung für eine erste Frequenz und einer zweiten Sendeeinrichtung für eine zweite Frequenz, wobei die Sendeeinrichtungen aus einem Quarzoszillator mit jeweils nachgeschalteten Frequenzvervielfachereinrichtungen und einer diesen nachgeschalteten Treiber- und Hochfrequenzendstufe bestehen, die mit einer aus dem Gehäuse herausragenden Sendeantenneneinrichtung verbunden sind, sowie mit zur Modulation der ausgesendeten Frequenzen dienenden Signaltongeneratoreinrichtungen, wobei der ersten und zweiten Sendeeinrichtung jeweils eine Steuereinrichtung zugeordnet ist, die intermittierend die beiden Sendeeinrichtungen wechselweise in Betrieb setzt.

Ein derartiges Notfunkgerät ist aus der US-A-36 17 894 bekannt. Das in dieser Druckschrift beschriebene Gerät besteht aus zwei an sich selbständigen, identisch aufgebauten und auf gleicher Sendefrequenz arbeitenden Einzelgeräten mit einer festen Modulation von 1 000 Hz, wobei das zweite Gerät lediglich aus Gründen der Sicherheit (Redundanz) vorgesehen ist. Aufgrund der Forderung nach Redundanz erfolgt auch die alternierende Arbeitsweise der Geräte. Jedes Gerät besitzt auch eine eigene Antenne und somit kann jedes Gerät nach Lösen der Kabelverbindung von dem anderen Gerät unabhängig betrieben werden. Durch die genannte Steckkabelverbindung zur Redundanzerhöhung soll erreicht werden, daß bei einem Defekt des ersten Senders der zweite Sender den Sendebetrieb übernimmt. Ob in der Praxis die beschriebene Synchronisation von zwei Geräten funktioniert, bleibt jedoch zweifelhaft, da bei einem Kurzschluß im ersten Sender der zweite Sender kein Startsignal aufbereiten kann. Arbeiten beide Geräte störungsfrei, ist immerhin ein intermittierender und alternierender Betrieb zweier separater Sender auf gleicher Frequenz mit festem Ton möglich.

Nachteilig ist, daß durch die Anordnung von zwei voneinander im wesentlichen unabhängigen Geräteeinheiten eine beträchtliche Gewichtserhöhung, unter Umständen auch Stromverbrauchserhöhung eintritt, auch ist der Platzbedarf relativ groß, da zwei voneinander trennbare Gehäuse mit einer dazwischenliegenden Kabelverbindung vorgesehen werden müssen. Das bekannte Notfunkgerät ist für Raketenköpfe sowie für den Korb von Meßballonen vorgesehen, es besitzt daher keine Vorkehrungen, um das Gerät auch bei Notwasserung funktionsfähig zu halten.

Im Gegensatz dazu ist ein Notfunkgerät gemäß dem Aufbau der Notfunkboje EB 218 der Firma LAWO Gerätebau, D-7550 Rastatt-Ottersdorf, auch für den Betrieb auf der Wasseroberfläche geeignet. Es handelt sich um eine Notfunkboje, die auf den Flugfunknotfrequenzen 121,5 MHz (zivil) und 243 MHz (militärisch) arbeitet, was für ein Notfunkgerät besondere Vorteile bietet.

Die hier im Mittelpunkt stehenden Notfunkgeräte werden vorzugsweise zur Rettung aus Seenot eingesetzt und ermöglichen eine großflächige Such- und Rettungsaktion mit Hilfe von Luftfahrzeugen. Durch das von dem Notfunkgerät abgestrahlte Signal läßt sich auch auf große Entfernung mit Hilfe von Flugzeugen und Hubschraubern der Standort des Notfunkgerätes anpeilen und so auch bei schlechten Sichtverhältnissen und insbesondere auch auf größere Entfernung der Standort des Havaristen feststellen.

Beide beschriebenen Notfunkgeräte arbeiten in ihrem jeweiligen Anwendungsbereich vermutlich zufriedenstellend, sie sind aber beide noch verhältnismäßig groß und daher in vielen Fällen nicht optimal einsetzbar. Insbesondere dann, wenn das Notfunkgerät ständig an der zu schützenden Person getragen wird, spielen Gewicht und Größe aber eine erhebliche Rolle. Nun kann man diese beiden Parameter (Größe und Gewicht) nicht beliebig verkleinern, da insbesondere die Versorgungsbatterie für das Notfunkgerät eine ausreichende Kapazität besitzen muß, um einerseits einen sicheren Betrieb über eine bestimmte Mindestsendezeit von z. B. 36 Stunden zu ermöglichen, andererseits darf aber die abgestrahlte Sendeleistung auch nicht zu klein werden, weil sich damit die größtmögliche Reichweite verringert. Aus diesem Grunde ist es ungünstig, daß bei dem Notfunkgerät der eingangs genannten Art, welches aus der US-A-36 17 894 bekannt ist, aus Redundanzgründen zwei identisch aufgebaute Geräteeinheiten verwendet werden, weil sich dadurch praktisch Gewicht und Raumbeanspruchung verdoppeln. Auch ist es bei dem Notrufgerät der eingangs genannten Art nachteilig, daß nicht auf zwei unterschiedlichen Frequenzen gesendet wird, obwohl dies für Notrufe besondere Vorteile bietet.

Günstig ist es, wenn diese zwei Frequenzen aus nur einem Quarzoszillator gewonnen werden, weil dies zum einen wiederum Gewichtseinsparungen und Raumeinsparungen ergibt, zum anderen eine definierte Beziehung zwischen den beiden unterschiedlichen Frequenzen hergestellt werden kann. Aus der GB-A-10 60 173 ist es in anderem Zusammenhang an sich bekannt, zwei voneinander abweichende Frequenzen mit nur einer Sendeeinrichtung zu erzeugen, und zwar im Falle dieser britischen Patentschrift zum Zwecke der Erhöhung der Übertragungssicherheit einer bestimmten Information durch Redundanz, wobei am Empfangsort die zwei unterschiedlichen Frequenzen, die aufgrund ihrer unterschiedlichen Frequenz über verschiedene Laufwege den Empfangsort erreicht haben, nach Demodulation wieder miteinander vereinigt werden und so die Sicherheit erhöht wird, daß das ausgesendete Informationssignal tatsächlich auch am Eingang vollständig eintrifft.

Mit dem hier in Rede stehenden Problem des Notrufs hat dies allerdings nichts gemein.

Aufgabe der vorliegenden Erfindung ist es, durch eine Kombination von verschiedenen Maßnahmen zu erreichen, daß bei unveränderter Reichweite und unveränderter maximaler Betriebsdauer das Gewicht und die Größe des Notfunkgerätes gegenüber dem Stand der Technik verringert, beispielsweise auf die Hälfte herabgesetzt werden kann. Gleichzeitig soll mit diesen Maßnahmen erreicht werden, daß die Betriebsweise des Notfunkgerätes der eingangs genannten Art ohne Abstriche hinsichtlich erreichbarer Größen- und Gewichtsverkleinerung an die im See- und Flugfunkbereich übliche Betriebsweise angepaßt werden kann.

Gelöst wird diese Aufgabe dadurch, daß bei einem Notfunkgerät der eingangs genannten Art die erste und die zweite Sendeeinrichtung in einem gemeinsamen, schwimmfähigen Gehäuse untergebracht, über einen gemeinsamen Quarzoszillator mit unterschiedlicher nachgeschalteter Frequenzvervielfachung angesteuert und über ein Antennenfilter an eine gemeinsame Antenne geführt sind, das die Endstufen der beiden Sendeeinrichtungen voneinander isoliert, daß die erste und die zweite Frequenz sich voneinander unterscheiden und daß die Steuereinrichtungen einen Taktsignalgenerator umfassen, der von einem Rampensignalgenerator mit nachgeschaltetem Differenzierglied und/oder Impulsformerglied gebildet wird und daß dem Rampensignalgenerator ein frequenzsteuerbarer Tonfrequenzoszillator nachgeschaltet ist, dessen Tonfrequenz in Abhängigkeit vom Rampensignal sich ändert und der zur Modulation zumindest einer der Sendeeinrichtungen vorgesehen ist.

Durch diese Maßnahmen wird der Raum- und Gewichtsbedarf für das Notfunkgerät drastisch reduziert, insbesondere nahezu halbiert, während gleichzeitig die Absendung von zwei unterschiedlichen Frequenzen über eine gemeinsame Antenne sichergestellt wird und insbesondere auch das Notfunkgerät nur ein einziges und dabei schwimmfähiges Gehäuse umfaßt, so daß insbesondere die Anwendung auch als Notfunkboje ermöglicht wird. Besonders gute Erkennbarkeit ergibt auch die besondere Art der Modulation, nämlich mit einer in Abhängigkeit vom Rampensignal sich ändernden Tonfrequenz. Beim Stand der Technik ist dagegen eine Modulation mit feststehender Frequenz vorgesehen und auch nicht erkennbar, wie eine Modulation mit gleitender Tonfrequenzänderung ermöglicht werden könnte.

Die erfindungsgemäße Schaltung hat gegenüber dem Stand der Technik vermutlich noch den weiteren Vorteil, daß die zweite Sendeeinrichtung auch noch bei einem Defekt der ersten Sendeeinrichtung weiterarbeitet.

Das erfindungsgemäße Notfunkgerät unterscheidet sich von Notfunkgeräten der Bauart, wie sie im Zusammenhang mit der Notfunkboje EB-218 der Firma LAWO Gerätebau beschrieben wurde, dadurch, daß die beiden unterschiedlichen Notfrequenzen nicht gleichzeitig abgestrahlt, sondern vielmehr im gegenseitigen Wechsel abgegeben werden, so daß die von der Batterie zu liefernde Leistung, die im wesentlichen von der Sendeendstufe bestimmt wird, nur für eine Sendeeinrichtung zu reichen braucht, während bei der beschriebenen Notfunkboje die Batterie beide Sendeeinrichtungen gleichzeitig versorgen muß und daher die doppelte Leistung zu liefern hat. Dies ist beim Stand der Technik zwar nicht der Fall, dort wird aber nur eine einzige Frequenz erzeugt.

In den Unteransprüchen sind vorteilhafte Ausgestaltungen des Erfindungsgegenstandes gelehrt.

So müssen beispielsweise Notfunkgeräte der geschilderten Art wasserdicht sein. Es ist daher zweckmäßig, die Einschaltung des Notfunkgerätes derart vorzunehmen, daß sie keinen Gehäusedurchbruch erfordern. Ein magnetisch betätigbarer Reed-Kontakt stellt eine derartige Einschaltvorrichtung dar, die eine besonders einfache wasserdichte Konstruktion ermöglicht. Damit nicht ein derartiger Reed-Kontakt sich durch die auf Schiffen häufig auftretenden magnetischen Störfelder unbeabsichtigt einschaltet und damit das Notfunkgerät unbeabsichtigt in Betrieb setzt, was zum einen die Batterie unnötigerweise entleeren und zum anderen zu Falschalarm führen könnte, wird die Stromversorgung, die über einen Reed-Kontakt erfolgt, der durch einen aus dem Gehäuse herausziehbaren magnetischen Stift betätigbar ist, durch einen in fester Zuordnung zu dem Reed-Kontakt stehenden Permanentmagneten ergänzt, der den Reed-Kontakt in bestimmter (Ein)-Schaltposition hält, wenn der magnetische Stift herausgezogen ist (Notruffall), wobei jedoch der Magnet des Stiftes in hineingeschobener Stellung die Wirkung des Festmagneten kompensiert und den Reed-Schalter in die Fortsetzung der Beschreibung auf Seite 4 der ursprünglichen Anmeldungsunterlagen andere (Aus)-Schaltposition bringt. Durch diese Maßnahmen können äußere Störfelder die Stellung des Reed-Kontaktes nicht mehr beeinflussen, so daß auch von dieser Seite her keine Betriebszeitverringerungen durch ungewolltes Entladen der Batterie auftreten können.

Kurze Beschreibung der Zeichnungen

Die Erfindung wird nachfolgend anhand eines Ausführungsbeispiels näher erläutert, das in den Zeichnungen dargestellt ist. Es zeigen :

Figur 1 in einem Blockdiagramm die elektrische Schaltung des erfindungsgemäßen Notfunkgerätes ;

Figur 2 Schaltungseinzelheiten hinsichtlich des die zentrale zeitliche Steuerung liefernden Rampengenerators sowie des nachgeschalteten Gleittonoszillators sowie dem Rampengenerator gleichfalls nachgeschalteter Pulsformer- und Taktsteuereinrichtungen, die beide Schaltmodulatoren ansteuern ;

Figur 3 Schaltungseinzelheiten hinsichtlich des zur Erzeugung der Sendefrequenzen dienenden Quarzoszillators sowie dem Quarzoszillator nachgeschalteter und von den Schaltmodulatoren modulierten Verdoppler sowie den Verdopplern nachgeschalteter Treiber- und Endstufeneinrichtungen ;

Figur 4 Schaltungseinzelheiten der Antennenfilter, die die Endstufen mit der Antenne verbinden ;

Figur 5 Schaltungseinzelheiten der Stromversorgung ; und

Figur 6 ein Zeitdiagramm zur Erläuterung der Betriebsweise des erfindungsgemäßen Notfunkgerätes.

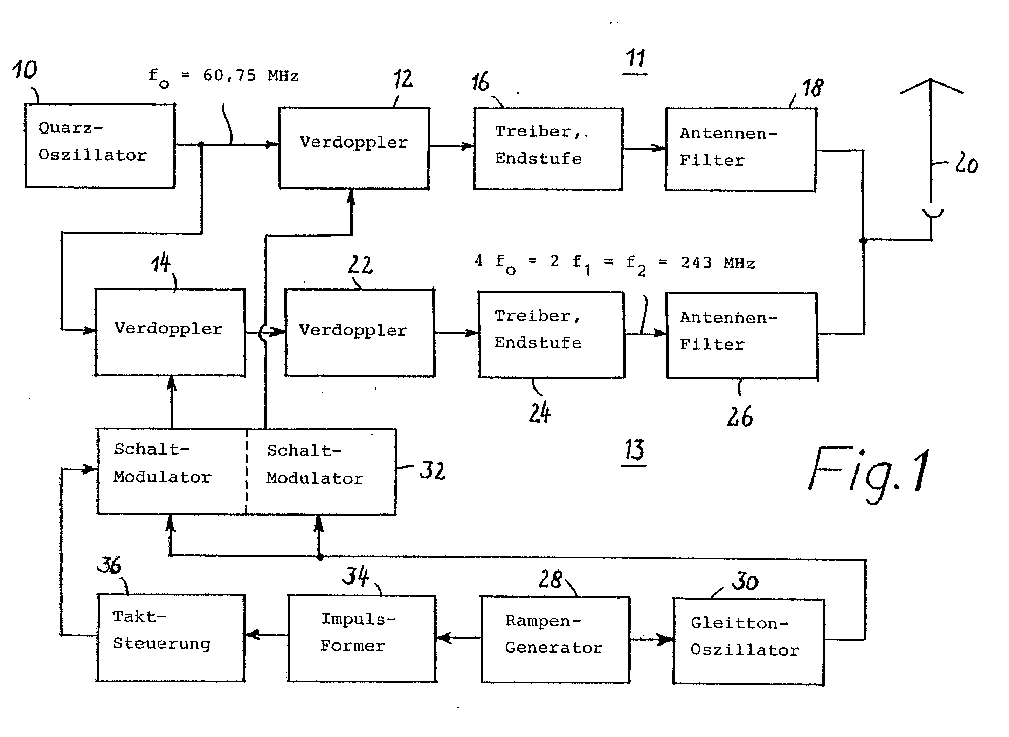

In Fig. 1 ist als Blockdiagramm die elektrische Schaltung des erfindungsgemäßen Notfunkgerätes wiedergegeben. Wie aus der Figur zu entnehmen ist, umfaßt das Notfunkgerät einen Quarzoszillator 10, der eine Grundfrequenz von hier 60,75 MHz erzeugt. Diese Frequenz wird einem Verdoppler 12 zugeführt, der die verdoppelte Frequenz $2f_o = f_1 = 121,5$ MHz an eine Treiber- und Endstufe 16 abgibt, die dann über ein Antennenfilter 18 diese Signalfrequenz an eine Stabantenne 20 liefert, die aus einem hier nicht dargestellten schwimmfähigen Gehäuse herausragt, das die in Fig. 1 dargestellten Schaltungsteile wasserdicht umschließt. Verdoppler 12, Treiber- und Endstufe 16 sowie Antennenfilter 18 bilden eine erste Sendeeinrichtung 11 für eine erste Notfrequenz von 121,5 MHz. Eine zweite, doppelt so hohe Notfrequenz (243 MHz) wird von einer zweiten Sendeeinrichtung 13 erzeugt, die gleichfalls einen vom Quarzoszillator 10 angesteuerten Verdoppler 14 sowie einen diesem Verdoppler 14 nachgeschalteten zweiten Verdoppler 22 umfaßt, der seinerseits dann wieder eine Treiber- und Endstufe 24 speist, welche Endstufe über ein Antennenfilter 26 gleichfalls an der Stabantenne 20 angeschlossen ist.

Die beiden Notfrequenzen eines Notfunkgerätes müssen, um als Notsignal erkannt zu werden, in bestimmter Weise moduliert sein. Zu diesem Zweck ist gemäß Fig. 1 in dem Notfunkgerät noch ein Rampengenerator 28 vorgesehen, der an seinem Ausgang eine Rampenspannung oder Sägezahnspannung liefert, die innerhalb einer bestimmten Zeit, beispielsweise innerhalb von 1 Sekunde, von einer niedrigen Spannung linear auf eine höhere Spannung ansteigt, um dann innerhalb wesentlich kürzerer Zeit wieder auf die ursprüngliche niedrigere Spannung abzufallen und erneut in der geschilderten Weise anzusteigen.

Dem Rampengenerator 28 ist ein Gleittonoszillator 30 nachgeschaltet, der an seinem Ausgang eine Tonwechselspannung abgibt, deren Frequenz sich mit der am Gleittonoszillator 30 anliegenden Rampenspannung ändert. Mit dieser Tonfrequenz werden dann über einen Schaltmodulator 32 die Sendeeinrichtungen 11, 13 derart moduliert, daß sich hinsichtlich der abgegebenen zwei Notfrequenzen eine 100 %ige Amplitudenmodulation ergibt. Im vorliegenden Falle geschieht dies durch Steuerung der jeweiligen ersten Verdopplerstufe 12 bzw. 14, wie im folgenden noch näher erläutert wird.

Der Rampengenerator steuert auch einen Impulsformer 34 an, der bei jedem Rücksprung der Rampenspannung des Rampengenerators 28 einen Impuls an eine dem Impulsformer nachgeschaltete Taktsteuerung 36 liefert, die, wie noch zu erläutern sein wird, mit Hilfe der von ihr angesteuerten Schaltmodulatoren 32 nur einen wechselweisen Betrieb der Sendeeinrichtungen 11, 13 zuläßt.

Es sei nun näher auf die in Fig. 1 nur blockweise dargestellten Bausteine des erfindungsgemäßen Notfunkgerätes eingegangen.

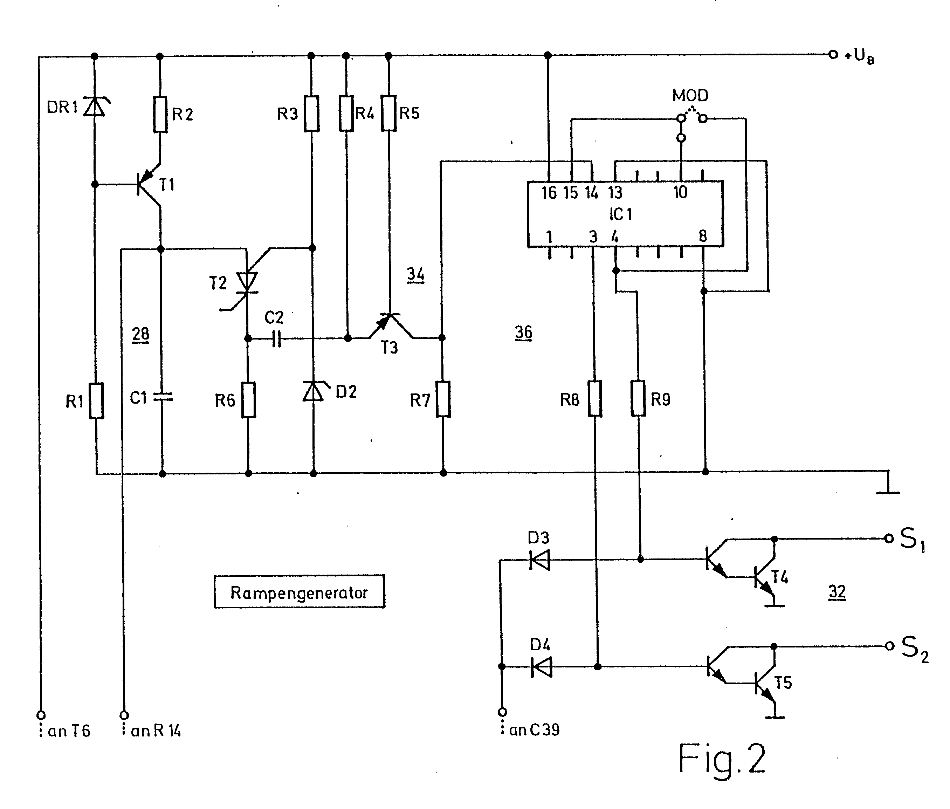

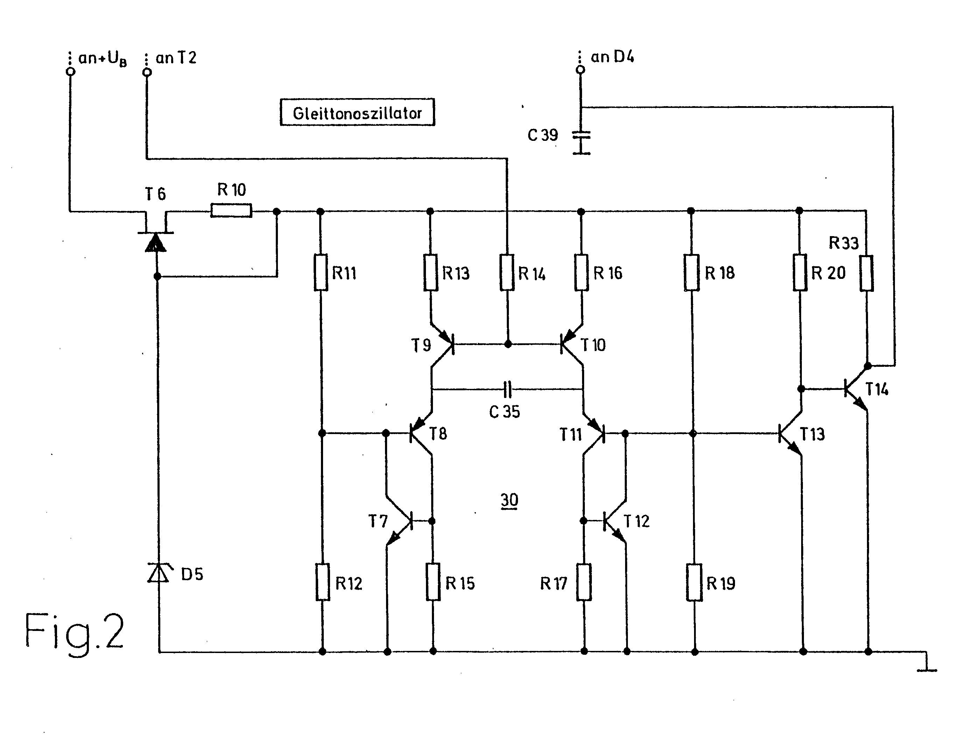

Wie aus Fig. 2 zu erkennen ist, umfaßt der Rampengenerator 28 einen als Konstantstromquelle arbeitenden Transistor T1, der seine Betriebsenergie über eine Betriebsstromquelle (+ $U_B$) erhält. Der konstante Strom wird durch einen mit seinem Teilerpunkt an der Basis von T1 liegenden Spannungsteiler R1, DR1 gebildet, wobei R1 ein ohmscher Widerstand und DR1 eine Zenerdiode ist. Der konstante Strom, der über die Emitterkollektorstrecke dieses Transistors fließt, lädt einen Kondensator C1 mit konstantem Strom auf, so daß die an C1 anliegende Spannung linear so lange ansteigt, bis die Zündspannung eines Thyristors T2 erreicht ist, die ihrerseits durch die Zenerdiode D2 und den Widerstand R3 festgelegt ist. Bei Zündung des Thyristors wird dieser leitend und entlädt den Kondensator C1 über den Widerstand R6, wobei über den Kondensator C2 auf den Emitter eines Transistors T3 eine positive impulsförmige Spannung geliefert wird. Ist C1 entladen, sperrt der Thyristor T2 wieder, und C1 wird in der geschilderten Weise erneut aufgeladen. Am Kondensator C1 entsteht somit eine sogenannte Rampen- oder Sägezahnspannung, deren Wiederholungsfrequenz beispielsweise mit Hilfe des Widerstandes R2 fest eingestellt werden kann.

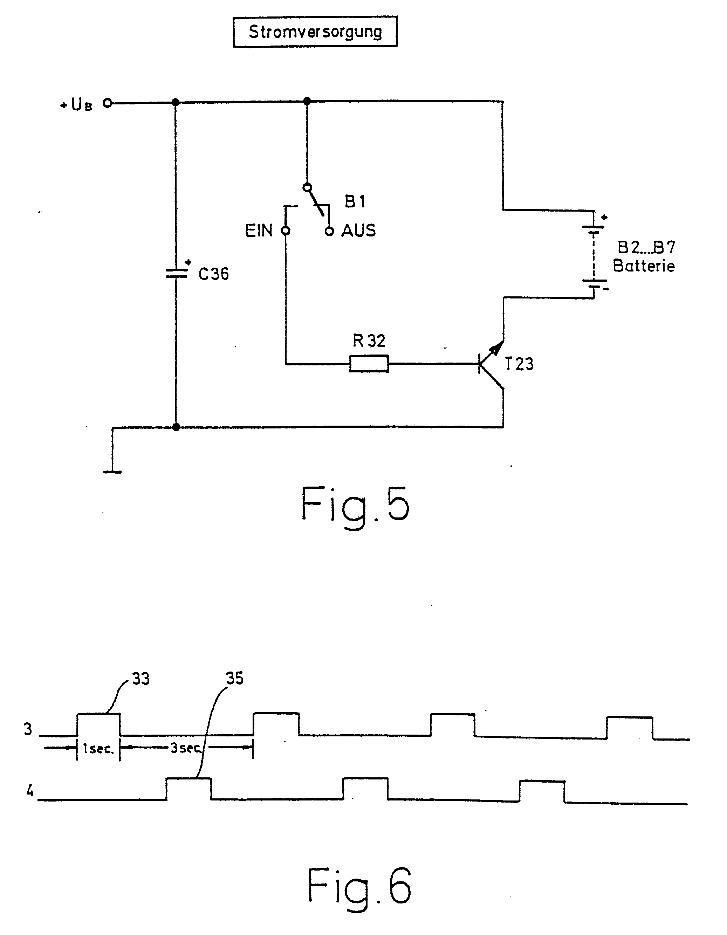

Der Transistor T3 verstärkt den über C2 gelieferten positiven Impuls, C2 und T3 bilden somit den Impulsformer 34. Der so geformte und verstärkte Impuls wird an einen als integrierten Baustein ausgebildeten Zähler IC1 geliefert, der hier sechzehn Anschlüsse aufweist. IC1 ist als ein Frequenzteiler geschaltet, der durch äußere Beschaltung in seiner Teilerstruktur geändert werden kann. Die hier dargestellte Beschaltung zwischen den Anschlüssen 10 und 15 bewirkt, daß an den Anschlüssen 3 und 4 Rechteckimpulse stehen, die zeitlich zueinander versetzt sind, wie es die Fig. 6 erkennen läßt. Bei dem hier beschriebenen Ausführungsbeispiel folgt somit am Anschluß 3 auf einen Impuls 33 mit einer Zeitdauer von 1 Sekunde eine Impulslücke von 3 Sekunden, in deren Mitte am Anschluß 4 ein entsprechender Impuls 35 von 1 Sekunde Dauer anliegt.

Diese Rechteckimpulse 33, 35 stellen die Taktsteuerung 36 dar, die in ganz bestimmtem Phasenverhältnis zu der Rampenspannung des Rampengenerators 28 liegen.

Die Rechteckimpulse der Anschlüsse 3 und 4 steuern eine Transistor-Darlington-Schaltung T4 bzw. T5 an, die als veränderliche Emitterwiderstände für die Transistoren T16 und T19 der noch zu beschreibenden Verdopplerstufen 12 bzw. 14 dienen.

Der in Fig. 2 unten dargestellte Gleittonoszillator 30 wird von einer konstanten Spannungsquelle — gebildet von einem von einer Zenerdiode D5 angesteuerten Transistor T6 — mit einer Betriebsspannung von etwa 4,2 V versorgt. Die Transistoren T7 und T8 bzw. T11 und T12 sind als Vierschichtdioden geschaltet und zünden bei einer Spannung, die durch R11 und R12 sowie R18 und R19 bestimmt wird. Die beiden Vierschichtdioden sind außerdem über C35 verbunden. Der Kondensator C35 wird über die als Konstantstromquellen arbeitenden Transistoren T9 bzw. T10 aufgeladen.

Schalten T7 und T8 durch, so wird über C35 der Emitter von T11 negativ. Der Kondensator C35 wird dann über T10 aufgeladen. Zünden nun T11 und T12, so wird der Emitter von T8 negativ, löscht T7 und T8 und die Aufladung von C35 erfolgt nunmehr über T9. Da die Basisvorspannung für T9 und T10 vom Rampengenerator 28 (C1) abgenommen wird, liefern die Konstantstromquellen T9 und T10 auch jeweils abnehmenden Ladestrom für C35.

Daher ändert sich die Schwingungsfrequenz des Gleittonoszillators von einer höheren Frequenz zu einer niedrigeren Frequenz, beispielsweise von etwa 1,3 kHz bis auf etwa 600 Hz. Über die Transistoren T13 und T14 wird diese Signalfrequenz verstärkt und über Dioden D3, D4 auf die bereits erwähnten Darlington-Transistor-Schaltungen T4 und T5 gegeben. Die Darlington-Transistoren T4 bzw. T5 werden somit einerseits von den in Fig. 6 dargestellten Taktsteuerspannungen (Impulse 33, 35) beaufschlagt, andererseits durch die vom Gleittonoszillator gelieferte Tonfrequenz, und zwar in der Weise, daß die Taktsteuerimpulse 33 die Darlington-Transistor-Schaltung T5 jeweils für 1 Sekunde im Abstand von jeweils 4 Sekunden einschalten und während dieser jeweiligen Einschaltdauer von 1 Sekunde die Transistorschaltung T5 durch eine Wechselspannung von 1,3 kHz ... 600 Hz unterbrochen wird. Entsprechend wird zeitlich versetzt die Darlington-Schaltung T4 durch die Impulse 35 (Fig. 6) im Abstand von 4 Sekunden jeweils für 1 Sekunde eingeschaltet, während dieser Einschaltdauer aber wiederum durch eine Wechselspannung mit einer Frequenz unterbrochen, die zu Beginn der Sekunde bei 1,3 kHz liegt, linear aber während dieser Sekunde auf 600 Hz abfällt.

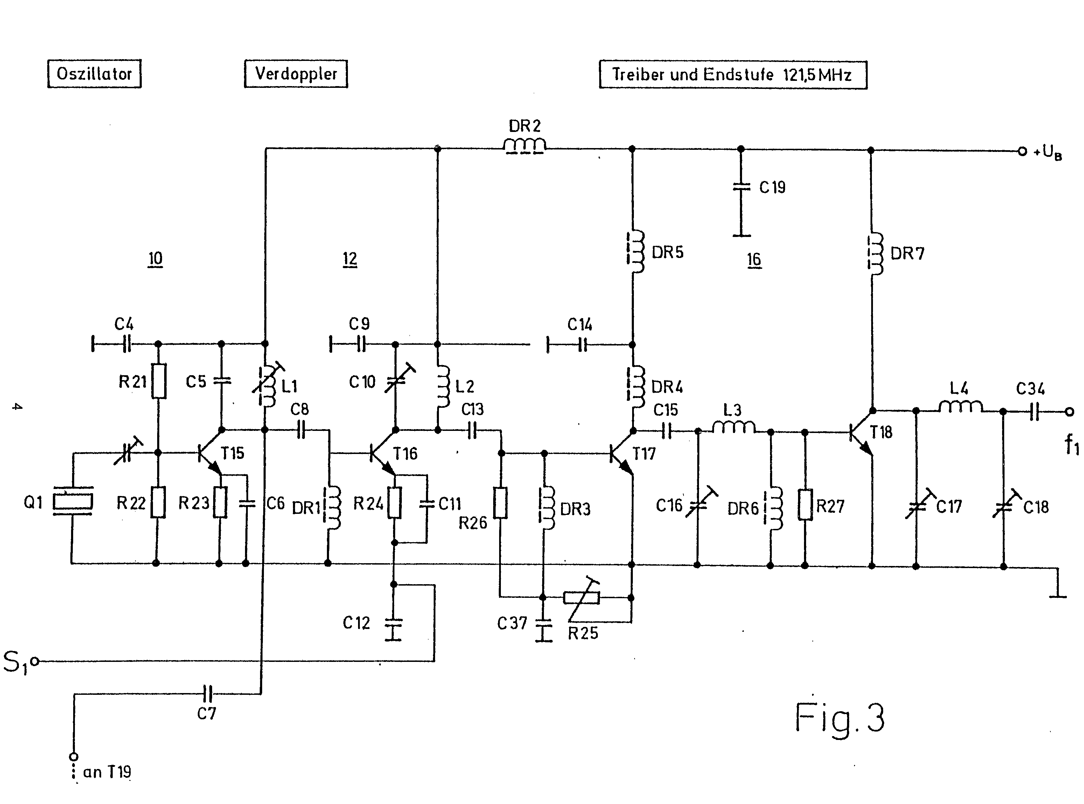

Die Fig. 3 zeigt zunächst einen Quarzoszillator 10, bestehend aus einem in Pierce-Schaltung arbeitenden Transistor T15, der auf 60,75 MHz quarzgenau schwingt. Der Oszillator liefert an den den Transistor T16 aufweisenden Verdoppler 12 sowie an den weiteren, den Transistor T19 umfassenden Verdoppler 14 seine die Frequenz von 60,75 MHz aufweisende Kollektorspannung. An den Kollektoren von T16 bzw. T19 läßt sich dann die verdoppelte Frequenz von 121,5 MHz abnehmen und einerseits einer die Transistoren T17 und T18 umfassenden Treiber- und Endstufe 16 und andererseits einer zweiten Verdopplerstufe 22 zuführen, die den Transistor T20 aufweist. Am Kollektor von T20 tritt dann die Frequenz von 243 MHz auf, die der aus den Transistoren T21 und T22 bestehenden Treiber- und Endstufe 24 zugeführt wird. Damit erscheinen an den Ausgangsanschlüssen $f_1$ bzw. $f_2$ hochfrequente Signale einer Frequenz von $f_1$ = 121,5 MHz bzw. $f_2$ = 243 MHz, und zwar mit einer Leistung von beispielsweise 0,5 oder 1 W.

Es wurde schon erwähnt, daß die Emitterwiderstände der Transistoren T16 bzw. T19, die den jeweils ersten Verdoppler 12 bzw. 14 ausmachen, von den Darlington-Transistor-Schaltungen T4 bzw. T5 des Schaltmodulators 32 gebildet werden. Das bedeutet, daß der jeweilige Verdoppler nur dann arbeitet, wenn die Transistorschaltungen T4 bzw. T5 leitend sind. Dies führt dazu, daß der Treiber- und Endstufe 16 bzw. 24 der beiden Sendeeinrichtungen 11, 13 nur dann Ansteuerenergie zugeführt wird und diese nur dann ein Ausgangssignal liefern, wenn der zugehörige Taktsteuerimpuls 33 bzw. 35 (Fig. 6) vorhanden ist, und daß außerdem während dieser Taktzeit die Sendeeinrichtung 11 bzw. 13 nochmals im Takt der Gleittonfrequenz unterbrochen wird. Damit ergibt sich eine 100 %ige Amplitudenmodulation durch diese Gleittonfrequenz.

Es wird somit erreicht, daß jeweils nur eine der beiden Sendeeinrichtungen 11, 13 arbeitet, so daß eine wesentliche Einsparung an Batterieleistung möglich ist. Diese besondere Wirtschaftlichkeit hinsichtlich der Energieversorgung wird noch dadurch betont, daß die beiden Sendeeinrichtungen 11, 13 zwischen den einzelnen Arbeitsperioden von 1 Sekunde Dauer für jeweils 3 Sekunden abgeschaltet sind und außerdem auch während der Durchmodulation durch den Gleittonoszillator 30 keine Sendeenergie abgestrahlt wird.

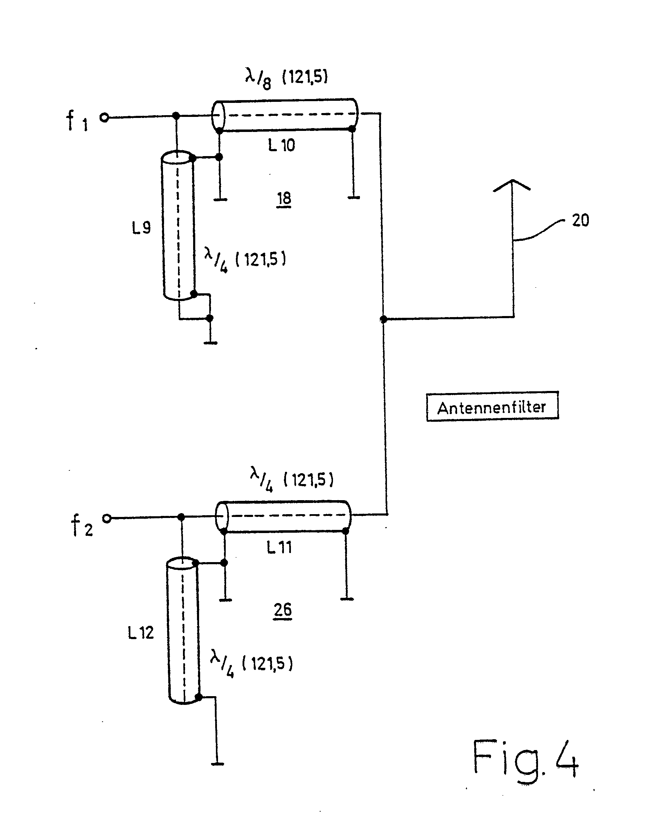

Um die Ausgangsanschlüsse $f_1$ und $f_2$ der Endstufen der beiden Sendeeinrichtungen voneinander zu isolieren, sind Antennenfilter 18 bzw. 26 vorgesehen, die in Fig. 4 näher dargestellt sind. Wie noch aus Fig. 3 hervorgeht, befindet sich am Ausgang der beiden Endstufen jeweils ein π-Kreis (C17, L4, C18 bzw. C31, L8, C32), der die Ankopplung der Ausgangsenergie der Endstufe an das Antennenfilter der Fig. 4 und von dort an die Stabantenne 20 ermöglicht. Das Antennenfilter besteht aus Koaxialleitungskreisen, die so bemessen sind, daß jeweils die Endstufe, die nicht arbeitet, an einem Punkt des Ausgangs anliegt, der keine Spannung führt.

So ist z. B. das Koaxialleitungsstück L9 (mit Länge λ/4, wobei λ die Wellenlänge der Frequenz von 121,5 MHz auf dem verwendeten Kabel bedeutet) bei 121,5 MHz am Eingang hochohmig (Parallelschwingkreis), während L10 mit einer Länge von λ/8 ein Stück Kurzkabel von z. B. 60 Ohm darstellt, das zum Antennenfußpunkt führt. L11 und L12 mit jeweils einer Länge von λ/4 bilden einen offenen λ/2-Kreis und sind damit am Eingang wie auch am Ausgang hochohmig, während der Verbindungspunkt f₂, an dem über C33 der Ausgang der zweiten Treiber- und Endstufe 24 angeschlossen ist, keinen Einfluß auf den am Antennenfuß liegenden hochohmigen Eingang besitzt. Vielmehr wirken die Kreise L11 und L12 noch als Parallelschwingkreis für die Frequenz von 121,5 MHz, so daß keine Energie etwa von dem Anschlußpunkt der Antenne 20 zu dem Transistor der Treiber- und Endstufe 24 für 243 MHz gelangen kann. Ist die Endstufe für 243 MHz jedoch in Betrieb, so wirkt L12 als Parallelschwingkreis (für die Frequenz von 243 MHz handelt es sich um einen λ/2-Kreis, der offen ist), während L11 wiederum eine zum Antennenfußpunkt führende 60 Ohm-Leitung darstellt. L10 und L9 bilden für 243 MHz einen 3/4 λ-Kreis, der am Ausgang kurzgeschlossen und am Eingang hochohmig ist (Parallelkreis). Die Endstufe für 121,5 MHz, die über C34 angeschlossen ist, liegt somit wieder im Spannungsminimum, hat also keinen Einfluß auf das Ausgangssignal von 243 MHz. Das beschriebene Antennenfilter ergibt für eine zwischen den beiden genannten Frequenzen liegende Frequenz von 200 MHz eine Bandbreite von 4 MHz und eine Güte von 50.

Damit ist erreicht, daß auch hinsichtlich der Abstrahlung der von den Endstufen gelieferten Energie keine die Reichweite mindernden Verluste auftreten.

In Fig. 5 ist zu erkennen, wie die Stromversorgung im einzelnen erfolgt. Als Stromquelle dient eine Lithiumbatterie B2 ... B7, die mit ihrem einen (hier negativen) Ende über die Emitter-Kollektorstrecke eines Transistors T23 an Masse, mit ihrem anderen (hier positiven) Ende an dem Anschlußpunkt + U_B liegt. Die Basis des Transistors T23 liegt — über einen Widerstand R32 — an dem einen Kontakt eines Reed-Schalters B1, also eines Schalters, der durch ein äußeres Magnetfeld hinsichtlich seiner Stellung geändert werden kann. Während normalerweise Reed-Schalter dadurch geschaltet werden, daß man ein äußeres Magnetfeld anlegt bzw. wieder entfernt, ist im vorliegenden Falle auf die Schaltplatte, auf der sich der Reed-Schalter B1 befindet, auch ein Permanentmagnet fest angeordnet, und zwar derartig, daß er den Reed-Schalter in seine — nicht dargestellte — Stellung « Ein » bringt. In dieser Stellung wird die Basis des Transistors T23 mit positiver Basisvorspannung versorgt und dadurch niederohmig, wodurch die Batteriespannung an die einzelnen Stufen angelegt wird.

Durch einen von außen einsteckbaren Stift, der einen weiteren Magneten trägt, kann der Einfluß des festen Permanentmagneten jedoch in der Weise kompensiert werden, daß sich der Reed-Schalter B1 in die in Fig. 5 dargestellte Stellung « Aus » legt. Diese Stellung ist die Ruhestellung, in der das Notfunkgerät kein Signal abgibt. Erst beim Herausziehen des magnetischen Stiftes aus dem Gehäuse geht der Reed-Kontakt in die Ruhestellung (Einschaltstellung). Durch diese Maßnahme steht der Reed-Kontakt ständig unter einem starken Magnetfeldeinfluß, so daß äußere Störmagnetfelder keine ungewollten Einschaltvorgänge verursachen können, was zum einen die Batterie unnötig entladen würde, zum anderen zu Fehlalarmauslösungen führen könnte.

Der Kondensator C36 der Fig. 5 ist vorgesehen, um ein sicheres Anschwingen des Oszillators zu gewährleisten, auch dann noch, wenn die Batterie schon an Kapazität verloren hat.

Gewerbliche Verwertbarkeit

Das gemäß der Erfindung ausgebildete Notfunkgerät und die Art und Weise, wie es betrieben wird, können wesentlich dazu beitragen, daß in Seenot geratene Personen oder beispielsweise auch Personen, die bei einer Landexpedition in Not geraten sind, mit größerer Sicherheit gehört und gerettet werden können, weil die Hilfebedürftigen ihre Notrufe wesentlich länger senden können als bisher. Damit wird nicht nur das Leben des Einzelnen besser geschützt, sondern es ergibt sich auch ein Vorteil in volkswirtschaftlicher Beziehung, weil der Ausfall von Personen, Gerät und Arbeitsergebnissen verringert bzw. ganz verhindert werden kann. Jede Maßnahme, die die Gewißheit steigert, daß man im Notfall nicht ohne Hoffnung auf Rettung ist, steigert die Leistungsbereitschaft. Aufgrund dessen ist die gewerbliche Verwertbarkeit der Erfindung gewährleistet.

**Patentansprüche**

1. Notfunkgerät, mit einer ersten Sendeeinrichtung (11) für eine erste Frequenz und einer zweiten Sendeeinrichtung (13) für eine zweite Frequenz, wobei die Sendeeinrichtungen aus einem Quarzoszillator (10) mit jeweils nachgeschalteten Frequenzvervielfachereinrichtungen (12, 14, 22) und einer diesen nachgeschalteten Treiber- und Hochfrequenzstufe (16) bestehen, die mit einer aus dem Gehäuse herausragenden Sendeantenneneinrichtung (20) verbunden sind, sowie mit zur Modulation der ausgesendeten Frequenzen dienenden Signaltongeneratoreinrichtungen (28, 30, 32), wobei der ersten und zweiten Sendeeinrichtung jeweils eine Steuereinrichtung (36) zugeordnet ist, die intermittierend die beiden Sendeeinrichtungen wechselweise in Betrieb setzt, dadurch gekennzeichnet, daß die erste (11) und die zweite (13) Sendeeinrichtung in einem gemeinsamen, schwimmfähigen Gehäuse untergebracht, über einen gemeinsamen Quarzoszillator (10) mit unterschiedlicher nachgeschalteter Frequenzvervielfachung (12 ; 14, 22) angesteuert und über ein Antennenfilter (18, 26) an eine gemeinsame Antenne (20) geführt sind, das die Endstufen der beiden Sendeeinrichtungen (11, 13) voneinander isoliert, daß die erste und die zweite Frequenz sich voneinander unterscheiden und daß die Steuereinrichtung (z. B. 36) einen Taktsignalgenerator (28, 34) umfaßt, der von einem Rampensignalgenerator (28) mit nachgeschaltetem Differenzierglied und/oder Impulsformerglied (34) gebildet wird, und daß dem Rampensignalgenerator (28) ein frequenzsteuerbarer Tonfrequenzoszillator (30) nachgeschaltet ist, dessen Tonfrequenz in Abhängigkeit vom Rampensignal sich ändert und der zur Modulation zumindest einer der Sendeeinrichtungen (11, 13) vorgesehen ist.

2. Notfunkgerät nach Anspruch 1, wobei die zweite Frequenz doppelt so hoch ist wie die erste Frequenz, dadurch gekennzeichnet, daß das Antennenfilter (18, 26) aus Koaxialkabelstücken der Länge λ/4 und λ/8 bzw. λ/4 und λ/4 bezüglich der ersten Frequenz bestehen und so geschaltet sind, daß sie jeweils die nicht arbeitende Endstufe an einen Punkt des Ausganges legen, der keine Spannung führt.

3. Notfunkgerät nach Anspruch 1 oder 2, dadurch gekennzeichnet, daß die Steuereinrichtung (36) einen Zählerbaustein (IC1) umfaßt, der von einem Taktsignalgenerator (28, 34) mit fester Wiederholfrequenz angesteuert wird und zwei Ausgänge (3, 4) besitzt, die im Takt der Wiederholfrequenz in zeitlicher Versetzung zueinander einen Rechtecksignalimpuls (33 bzw. 35) abgeben.

4. Notfunkgerät nach Anspruch 1, 2 oder 3, dadurch gekennzeichnet, daß die Wiederholfrequenzzeitperiode ein ganzzahliges Vielfaches der Breite des Rechtecksignalimpulses (33 bzw. 35) ist, insbesondere das Vierfache der Impulsbreite darstellt, und daß die zeitliche Versetzung die halbe Periode beträgt.

5. Notfunkgerät nach Anspruch 4, dadurch gekennzeichnet, daß die Wiederholfrequenzzeitperiode vier Sekunden, die Versetzung zwei Sekunden und die Impulsbreite eine Sekunde beträgt.

6. Notfunkgerät nach Anspruch 5, dadurch gekennzeichnet, daß die Taktsteuerung und Modulation durch Änderung des Emitterpotentials eines in Emittergrundschaltung betriebenen, eine Verdopplerstufe (12 bzw. 14) bildenden Transistors (T16 bzw. T19) erfolgt.

7. Notfunkgerät nach Anspruch 6, dadurch gekennzeichnet, daß das Emitterpotential von zwei Transistoren in Darlington-Schaltung (T4 bzw. T5) geliefert wird, die als Emitterwiderstand für den Transistor (T16 bzw. T19) der Verdopplerstufe (12 bzw. 14) wirken und die einerseits von der Tonfrequenz, andererseits von dem Rechteckimpuls (33 bzw. 35) durchgesteuert werden.

8. Notfunkgerät nach Anspruch 7, dadurch gekennzeichnet, daß die Tonfrequenz die Basis des Eingangstransistors der Darlington-Schaltung (T4 bzw. T5) über eine Diode (D3, D4) ansteuert, deren Verbindungspunkt mit der Basis mit dem Rechtecksignalimpuls (33 bzw. 35) beaufschlagbar ist.

9. Notfunkgerät nach einem der Ansprüche 1 bis 8, dadurch gekennzeichnet, daß die Stromversorgung über einen Reed-Kontakt (B1) erfolgt, der durch einen aus dem Gehäuse herausziehbaren magnetischen Stift betätigbar ist.

10. Notfunkgerät nach Anspruch 9, dadurch gekennzeichnet, daß der Reed-Kontakt (B1) von einem in fester Zuordnung zu ihm stehenden Magneten in bestimmter (Ein)-Schaltposition gehalten wird, wenn der magnetische Stift herausgezogen ist, und daß der Magnet des Stiftes in hereingeschobener Stellung die Wirkung des festen Magneten kompensiert und den Reed-Schalter (B1) in die andere (Aus)-Schaltposition bringt.

11. Notfunkgerät nach Anspruch 9 oder 10, dadurch gekennzeichnet, daß die Stromversorgung über die Serienschaltung aus einer Lithiumbatterie und der Emitter-Kollektorstrecke eines Transistors (23) erfolgt, dessen Basis über den Reed-Kontakt (B1) mit dem nicht am Transistor liegenden Anschluß der Batterie verbindbar ist.

12. Verfahren zum Betrieb eines Notfunkgerätes, das mit einer ersten Sendeeinrichtung für eine erste Frequenz und einer zweiten Sendeeinrichtung für eine zweite Frequenz versehen ist, nach einem der Ansprüche 1 bis 11, dadurch gekennzeichnet, daß die beiden Sendeeinrichtungen abwechselnd betrieben werden und die jeweilige Betriebsdauer die Betriebsdauer der anderen Sendeeinrichtung nicht überschreitet.

13. Verfahren nach Anspruch 12, dadurch gekennzeichnet, daß die Wiederholungsfrequenzperiode jeder Sendeeinrichtung im Sekundenbereich liegt, vorzugsweise vier Sekunden beträgt, und daß die jeweilige Betriebsdauer weniger als die Hälfte, vorzugsweise ein Viertel der Wiederholungsfrequenzperiode ausmacht, vorzugsweise eine Sekunde beträgt.

14. Verfahren nach Anspruch 12 oder 13, dadurch gekennzeichnet, daß die Sendeeinrichtungen während ihrer jeweiligen Betriebsdauer mit einer sich ändernden Tonfrequenz moduliert werden.

15. Verfahren nach Anspruch 14, dadurch gekennzeichnet, daß die Tonfrequenz sich während der jeweiligen Betriebsdauer von einer höheren zu einer niedrigeren Frequenz ändert, vorzugsweise von einer Frequenz von ca. 1,3 kHz linear auf eine Frequenz von ca. 600 Hz.

## Claims

1. Emergency transmitter, having a first transmission means (11) for a first frequency, and a second transmission means (13) for a second frequency, the transmission means comprising a quartz oscillator (10) and respective subsequently connected frequency multipliers (12, 14, 22) which are connected to drive stages and high frequency final stages (16), the latter being connected to a transmission antenna (20) which extends from the housing, as well as to signal generator means (28, 30, 32) for modulating the transmitted frequencies, the first and said second transmission means being associated with a control device (36), which is setting alternately the two transmission means in operation, characterized in that the first (11) and said second (13) transmission means are accommodated in a common floatable housing, controlled by a quarz oscillator (10) in common and different respective frequency multiplying means (12, 14, 22) connected to said quarz oscillator, and are connected via an antenna filter (18, 26) to a common antenna (20), which insulates the final stages of the both transmission means (11, 13) ; in that the first and the second frequency are different and that the control device (e. g. 36) includes a fixed-cycle signal generator (28, 34) which is formed by a ramp signal generator (28) having connected thereto a differentiator and/or a pulse shaper (34) an in that the ramp signal generator (28), has subsequently connected thereto a tone frequency oscillator (30) the frequency of which can be controlled so that tone or audio frequency thereof varies as a function of the ramp signal and which is provided for modulation of at least one of the transmission means (11, 13).

2. Emergency transmitter according to claim 1, whereby the second frequency is twice as great as the first frequency, characterized in that the antenna filters (18, 26) comprise coaxial-line sections of the length λ/4 and λ/8, or λ/4 and λ/4, relative to the first frequency, and are connected in such a way that at any given time they place the final stage which is not operating at a point of the output where no voltage is carried.

3. Emergency transmitter according to claim 1 or 2, characterized in that the control device (36) includes a counter (IC1) which is triggered by a fixed-cycle signal generator (28, 34) having a fixed repetition frequency, and which has two outputs (3, 4) which during the cycle of the repetition frequency each emit a rectangular signal pulse (33 or 35) which are out of phase relative to one another per given unit of time.

4. Emergency transmitter according to claim 1, 2 or 3, characterized in that the time period of the repetition frequency is an integral multiple of the width of the rectangular pulse (33 or 35), especially four times the length of the pulse, and in that the phase offset per unit time equals half of the time period.

5. Emergency transmitter according to claim 4, characterized in that the time period of the repetition frequency is four seconds, the phase offset is two seconds, and the length of the pulse is one second.

6. Emergency transmitter according to claim 5, characterized in that the fixed-cycle control and modulation is effected by changing the emitter potential of a transistor (T16 or T19) which is operated in a grounded emitter circuit and forms a doubler stage (12 or 14).

7. Emergency transmitter according to claim 6, characterized in that two transistors in a Darlington-circuit (T4 or T5) deliver an emitter potential which acts as the emitter resistance for the transistor (T16 or T19) of the doubler stage (12 or 14), and which on the one hand is excited by the tone frequency, and on the other hand is excited by the rectangular pulse (33 or 35).

8. Emergency transmitter according to claim 7, characterized in that the tone or audio frequency triggers the base of the input transistor of the Darlington-circuit (T4 or T5) via a diode (D3, D4), the connecting point of which with the base can be acted upon by the rectangular signal pulse (33 or 35).

9. Emergency transmitter according to one of the claims 1 to 8, characterized in that the power supply is effected by a reed-contact (B1) which can be activated by a magnetic pin which can be pulled out of the housing.

10. Emergency transmitter according to claim 9, characterized in that the reed-contact (B1) is held in a certain (on) switching position by a magnet which is fixed relative thereto when the magnetic pin is pulled out, and in that the magnet of the pin in the inserted position compensates for the effect of the fixed magnet and brings the reed-switch (B1) into the other (off) switching position.

11. Emergency transmitter according to claim 9 or 10, characterized in that the power supply is effected via the series arrangement of a lithium battery and the emitter/collector section of a transistor (23), the base of which can be connected via the reed-contact (B1) with that terminal of the battery which is not connected to the transistor.

12. Method of operating an emergency transmitter which is provided with a first transmission means for a first frequency, and a second transmission means for a second frequency, especially pursuant to one of the claims 1 to 11, characterized in that two transmission means are operated alternately, and the duration of operation of one of the transmission means does not overlap the duration of operation of the other transmission means.

13. Method according to claim 12, characterized in that the repetition frequency period of each transmission means is a number of seconds, preferably four seconds, and in that the respective duration of operation is less than half, preferably 1/4, of the repetition frequency period, preferably one second.

14. Method according to claim 12 or 13, characterized in that the transmission means are modulated during their respective duration of operation with a changing tone frequency.

15. Method according to claim 14, characterized in that the tone frequency changes during the respective duration of operation from a higher to a lower frequency, preferably from a frequency of about 1.3 kHz linearly to a frequency of about 600 Hz.

**Revendications**

1. Appareil de radio de détresse comprenant un premier dispositif d'émission (11) donnant une première fréquence et un deuxième dispositif d'émission (13) donnant une deuxième fréquence, les dispositifs d'émission étant composés d'un oscillateur à quartz (10) suivi de dispositifs multiplicateurs de fréquence (12, 14, 22) et d'un étage excitateur et de haute fréquence (16) connecté en aval de ces dispositifs multiplicateurs, et qui est relié à un dispositif d'antenne d'émission (20), qui sort du boîtier, ainsi qu'à des dispositifs générateurs de son (28, 30, 32) utilisés pour la modulation des fréquences émises, cependant qu'à chacun des premiers et deuxième dispositifs d'émission est associé un dispositif de commande (36) qui met alternativement les deux dispositifs d'émission en service de façon intermittente, caractérisé en ce que, dans un appareil radio de détresse du genre cité au début, le premier (11) et le deuxième (13) dispositifs d'émission sont logés dans un boîtier flottant commun, sont commandés par un oscillateur à quartz commun (10) suivi de multiplications de fréquences différentes (12, 14, 22) et sont raccordés à une antenne commune (20) par l'intermédiaire d'un filtre d'antenne (18, 26) qui isole l'un de l'autre les étages terminaux des deux dispositifs d'émission (11, 13), en ce que la première et la deuxième fréquence sont différentes l'une de l'autre et en ce que le dispositif de commande, par exemple (36) comprend un générateur de signal d'horloge (28, 34) qui est formé par un générateur de signal rampe (28) suivi d'un organe différentiateur et/ou d'un organe de mise en forme des impulsions (34), par le fait qu'en aval du générateur de signal rampe (28) est connecté un oscillateur de fréquence de son (30), pouvant être commandé en fréquence et dont la fréquence varie en fonction du signal rampe et qui est prévu pour la modulation d'au moins l'un des dispositifs d'émission (11, 13).

2. Appareil de radio de détresse selon la revendication 1, dans lequel la deuxième fréquence est deux fois plus élevée que la première fréquence, caractérisé en ce que le filtre d'antenne (18, 26) est composé de morceaux de câble coaxial de longueur λ4 et λ8 ou λ4 et λ4 pour la première fréquence et sont connectés de manière que l'étage terminal qui ne travaille pas soit connecté à un point de la sortie qui ne conduit pas de tension.

3. Appareil de radio de détresse selon la revendication 1 ou 2, caractérisé en ce que le dispositif de commande (36) comprend un composant compteur (IC1) qui est piloté par un générateur de signaux d'horloge (28, 34) possédant une fréquence de répétition fixe et possède deux sorties (3, 4) qui émettent une impulsion en signal rectangulaire (33 ou 35 respectivement) avec un décalage temporel mutuel au rythme de la fréquence de répétition.

4. Appareil de radio de détresse selon la revendication 1, 2 ou 3, caractérisé en ce que la période de la fréquence de répétition est un multiple entier de la largeur de l'impulsion en signal rectangulaire (33 ou 35), en particulier, le quadruple de la largeur d'impulsion et en ce que le décalage dans le temps est égal à la moitié de la période.

5. Appareil de radio de détresse selon la revendication 4, caractérisé en ce que la période de la fréquence de répétition est de quatre secondes, le décalage de deux secondes et la largeur d'impulsion d'une seconde.

6. Appareil de radio de détresse selon la revendication 5, caractérisé en ce que la commande du rythme et la modulation s'effectuent par la modification du potentiel d'émetteur d'un circuit transistor (T16 ou T19 respectivement) qui forme un étage doubleur (12 ou 14 respectivement) travaillant en montage à émetteur commun.

7. Appareil de radio de détresse selon la revendication 6, caractérisé en ce que le potentiel d'émetteur est fourni par deux transistors en montage de Darlington (T4 et T5) qui se comportent comme une résistance d'émetteur pour le transistor (T16 ou T19 respectivement) de l'étage doubleur (12 ou 14 respectivement) et ils sont commandés, d'une part, par la fréquence audible et, d'autre part, par l'impulsion rectangulaire (33 ou 35 respectivement).

8. Appareil de radio de détresse selon la revendication 7, caractérisé en ce que la fréquence audible attaque la base du transistor d'entrée du montage de Darlington (T4 ou T5 respectivement) par l'intermédiaire d'une diode (D3, D4) dont le point de jonction avec la base peut être attaqué par l'impulsion en signal rectangulaire (33 ou 35 respectivement).

9. Appareil de radio de détresse selon l'une des revendications 1 à 8, caractérisé en ce que l'alimentation en courant s'effectue par l'intermédiaire d'un interrupteur à lamelles (B1) qui peut être manœuvré par une tige magnétique qu'on peut tirer du boîtier.

10. Appareil de radio de détresse selon la revendication 9, caractérisé en ce que l'interrupteur à lamelles (B1) est maintenu dans une position de commutation déterminée (marche) par un aimant qui est dans une disposition fixe par rapport à lui lorsque la tige magnétique est tirée et en ce que, dans la position enfoncée, l'aimant de la tige compense l'action de l'aimant fixe et met l'interrupteur à lamelles (B1) dans l'autre position de commutation (arrêt).

11. Appareil de radio de détresse selon l'une des revendications 9 et 10, caractérisé en ce que l'alimentation en courant s'effectue à travers le circuit en série composé d'une pile au lithium et du circuit émetteur-collecteur d'un transistor (23) dont la base peut être connectée à travers l'interrupteur à lamelles (B1) à la connexion de la pile qui n'est pas connectée au transistor.

12. Procédé d'utilisation d'un appareil de radio de détresse qui est muni d'un premier dispositif d'émission donnant une première fréquence et d'un deuxième dispositif d'émission donnant une deuxième fréquence, selon l'une des revendications 1 à 11, caractérisé en ce que les deux dispositifs d'émission sont mis en action en alternance et en ce que la durée de service de chacun n'excède pas la durée de service de l'autre dispositif d'émission.

13. Procédé selon la revendication 12, caractérisé en ce que la période de fréquence de répétition de chaque dispositif d'émission est de l'ordre de la seconde, de préférence égal à quatre secondes, en ce que la durée de service est inférieure à la moitié de la période de la fréquence de répétition, de préférence égale à un quart de cette période et, de préférence, égale à une seconde.

14. Procédé selon la revendication 12 ou 13, caractérisé en ce que les dispositifs d'émission sont modulés pendant leur durée de service par une fréquence audible variable.

15. Procédé selon la revendication 14, caractérisé en ce que la fréquence audible varie d'une fréquence élevée à une fréquence plus basse pendant la durée de service, de préférence, d'une fréquence d'environ 1,3 kHz à une fréquence d'environ 600 Hz par variation linéaire.

Fig.1

$f_o = 60,75$ MHz

10 — Quarz-Oszillator

11

12 — Verdoppler

16 — Treiber, Endstufe

18 — Antennen-Filter

20

14 — Verdoppler

$4 f_o = 2 f_1 = f_2 = 243$ MHz

22 — Verdoppler

24 — Treiber, Endstufe

26 — Antennen-Filter

32 — Schalt-Modulator | Schalt-Modulator

13

36 — Takt-Steuerung

34 — Impuls-Former

28 — Rampen-Generator

30 — Gleitton-Oszillator

0 098 847

Rampengenerator

Fig. 2

0 098 847

Fig.2

an+U_B    an T2

Gleittonoszillator

an D4

C 39

T 6    R 10

R11    R13    R 14    R 16    R 18    R 20    R33

T 9    T 10

C 35

T8    T11    T 14

30

T 7    T 12    T13

D5

R12    R 15    R 17    R 19

0 098 847

Fig.3

$\lambda/_8$ (121,5)

L 10

$\underline{18}$

$\lambda/_4$ (121,5)

L9

f₁

20

Antennenfilter

$\lambda/_4$ (121,5)

L 11

$\underline{26}$

f₂

L 12

$\lambda/_4$ (121,5)

Fig.4

Stromversorgung

+U_B

B1

EIN     AUS

C36

B2...B7
Batterie

R32     T23

# Fig.5

33     35

3

1sec.    3sec.

4

# Fig.6